# EUROPEAN PATENT SPECIFICATION

(11) **EP 1 398 887 B1**
(45) Date of publication and mention of the grant of the patent: **24.11.2004**
(21) Application number: 02020400.4
(22) Date of filing: 12.09.2002
(51) Int. Cl.: H04B 7/08

(54) **Dual band diversity receiver**
Doppelband-Diversitätsempfänger
Récepteur en diversité à double bande

(43) Date of publication of application: 17.03.2004
(73) Proprietor: SIEMENS AKTIENGESELLSCHAFT, 80333 München (DE)
(72) Inventor: Stichelbout, Thomas, 9000 Aalborg (DK)

(56) References cited:
- EP-A- 0 784 381
- EP-A- 1 164 719
- WO-A-94/11819

## Description

### Field of the invention

The invention relates generally to receivers in a telecommunications system, and more specifically to diversity receiving of radio signals.

### Background of the invention

In modern wireless communication systems, such as in the Global System for Mobile communications GSM, or in the Universal Mobile Telephony System UMTS, the development of different services has been very rapid. The users are supplied with image and audio data, multimedia services, and so forth, all data transfer consuming air interface. Because the number of mobile users has also been growing tremendously, the network and equipment designers have been forced to find new solutions for the constant need to increase transfer capacity. Solutions available for increasing the transmission capacity include different division mechanisms (frequency, time, or code division) for increasing the possible number of simultaneous users for radio channels, downsizing of the radio cells, and, utilising more frequency bands.

The network resources should be efficiently utilised, and most subscribers prefer to have a network coverage also while travelling abroad where different radio frequency channels or modulation technologies are used. For example, in the US a GSM 900 receiver common in Europe is not usable, but a GSM 1900 receiver might work in the networks of some operators if the home operator of the travelling subscriber has agreed on roaming with them. Therefore, in the market there are already dual- and even triple-band handsets; one of the most common being a dual-band handset with GSM 900 and GSM 1800 capabilities. The GSM channel coding is similar in both bands, but for the second frequency another antenna is usually needed. Also models containing Code Division Multiple Access CDMA and GSM capabilities are in the market, and with the evolution of UMTS phones, also Wide-Band-CDMA (WCDMA) devices are to enter the market with GSM capabilities.

Different frequency bands and different division mechanisms require the received signal to be handled in different ways. Different frequencies require different demodulation frequencies, and if the coding scheme is different, also the receiver needs to know how to decode the received signal. Therefore, the state of the art dual- or triple-band receivers have a separate receiver for each frequency band.

Two prior art solutions from patent documents EP 1 164 719 A1 and WO 94/11819 are intended for providing a mobile terminal operating in two frequency bands. Further, because it is crucial that the receiver can receive also signal with poorer signal quality, e.g. because of shadowing or multipath propagation, the solutions in the cited documents utilise also the spatial diversity phenomenon in the receiver. The idea of spatial diversity lies on the fact that probably one of multiple antennas receiving the same signal is capable of receiving the signal which suffers less from distortions; in some cases the received signal is combined from both received signals, in others only the better one of the signals is selected.

The '819 describes a diversity receiving system for the Personal Cordless System PCS. In the system there are, in principle, two kinds of users; one group of the users is almost stationary (pedestrians, referred as low-tier) while another group is moving (referred as high-tier). The frequency band used is the ordinary PCS frequency band, and the spatial diversity receiver part is used for the fast moving stations; therefore the mobile station has two antennas for one frequency band. The proposed solution does not help in designing a dual band receiver including a diversity function receiver which operates on e.g. WCDMA and GSM bands, as the different coding systems and antenna structures pose significant additional problems.

The '719 mainly concentrates on the selection between the two receive paths as a matter of choosing the highest signal strength. In the selection procedure the aspect of calculating the reflections is emphasised. The reflections due to the fading conditions, i.e. from the surrounding environment, are combined in order to obtain a stable communication path. Firstly, it is not sure whether this method alone is capable of offering a good enough signal quality for diversity receiving purposes. Secondly, a solution according to '719 does not help in obtaining a simple and cost effective receiver, because in the receive circuits the diversity is obtained on radio frequency signal thus making the system more complicated and expensive.

The object of the invention is to obtain a solution by means of which it is possible to bring about a system and method which provide a cost-effective and simple multiple band receiving apparatus capable of using the receiver diversity phenomenon.

### Summary of the invention

This and other objectives of the invention can be achieved with a method and a system according to any of the independent patent claims.

A diversity receiver arrangement capable of operating on at least two frequency bands comprises i) a first and second input for a first and a second signal from a first and a second antenna, the first and second antennas being tuned around a first and second frequency band, respectively, ii) a first receiver system optimised for receiving the first signal of the first frequency band, and iii) a second receiver system optimised for receiving the second signal of the second frequency band, the second receiver system including 1) a preamplifier, 2) a band-pass filter, and 3) a frequency converter which uses a third signal coming from an oscillator tuned into the second frequency band, a mixer, and 4) an amplifier, and iv) means for replacing the third signal from the oscillator by a fourth signal tuned into the first frequency band for obtaining a signal from the second receiver system, to be used for receiver diversity purposes. On one hand, such a receiver apparatus enhances the performance of the equaliser, because now receive paths reserved for other systems can be used. On the other hand, it enhances the component reuse in the device, thus making it smaller and reducing complexity and cost of manufacturing.

A diversity receiving method comprises steps of: i) receiving a first and a second signal from a first and a second antenna, the first and second antennas being tuned around first and second frequency bands, ii) passing the first signal to a first receiver system optimised for receiving the first frequency band, iii) passing the second signal to a second receiver system optimised for receiving the second frequency band, where the second signal is 1) preamplified, 2) band-pass filtered, and 3) frequency converted, wherein the second signal is mixed with a third signal obtained from an oscillator, and 4) amplified. In the method the third signal coming from the oscillator is replaced by a fourth signal tuned into the first frequency band for obtaining a fifth signal from the second receiver system, to be used for receiver diversity purposes. On one hand, such a receiver system enhances the performance of the equaliser, because now receive paths reserved for other systems can be used. On the other hand, it enhances the component reuse in the device, thus making it smaller and reducing complexity and cost of manufacturing.

In accordance with one aspect of the present invention, by using a compensation filter for equalising the signal from the second receiver system the effect of distortions caused by non-optimal preamplifier bandwidth, front end module and filters in the receive path are minimised. This in turn helps in adapting the system for re-using the already existing receive path of dual- and multi-band mobile terminals, because the otherwise poor signal quality is improved.

In accordance with one further aspect of the present invention, by using asymmetric receiver systems in the diversity receiver arrangement, the complexity of a mobile terminal or base station in which the arrangement is used can be reduced. Such an arrangement enables the possibility of obtaining the benefits of diversity receiving even without multiple antennas and receiver systems optimised for receiving in the same band. As a consequence, not only the size of the equipment may be reduced, but also the number of expensive parts in the equipment can be reduced as compared to such an equipment in which no receive path reuse is used.

In accordance with one further aspect of the present invention, using the inventive method and/or arrangement for receiving of UMTS or WCDMA signals, the comfort of use of a mobile terminal or a base station may be enhanced, because the better transmission quality as compared to the anticipated receive characteristics of a standard UMTS or WCDMA mobile terminal reduces errors and thus distortions in speech signals, and improves also the data transmission characteristics by reduced bit error rate.

### Brief Description of the Drawings

In the following, the invention and its preferred embodiments are described more closely referring to the examples shown in FIG. **1-5** in the appended drawings, wherein:
- FIG. **1**: illustrates a block diagram of a diversity receiver arrangement according to the invention,
- FIG. **2**: shows how a UMTS signal received by the second antenna is handled in the second receiver system in order to obtain a signal to be passed to the diversity receiver,
- FIG. **3**: shows how a signal normally received by the second antenna is handled in order to obtain a signal to be passed to the GSM receiver,
- FIG. **4**: is a block diagram of signal connections for a control circuit to be used for implementing the invention,
- FIG. **5A**: is a table for describing the positions of the system switches when the receiver arrangement is in the GSM 1800 mode, and
- FIG. **5B**: is a table for describing the positions of the system switches when the receiver arrangement is used as a UMTS diversity receiver.

Like references refer to similar elements throughout the figures.

### Detailed description of the invention

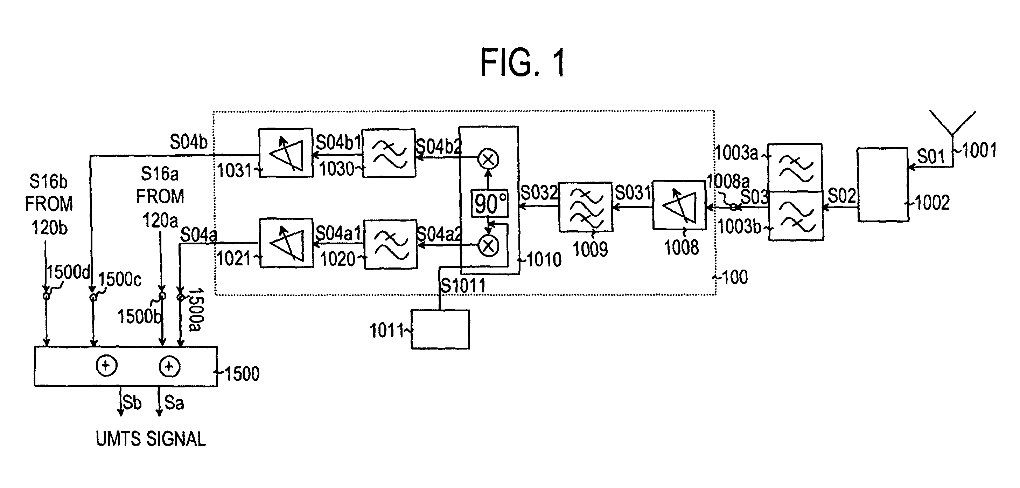

Figure 1 illustrates a block diagram of a diversity receiver arrangement according to the invention. Signal S01 received by the antenna 1001 is passed to a front end module 1002. After handling the signal in the front end module the processed signal S02 is passed to a high pass filter 1003b. The receiver/transceiver systems in modern mobile terminals usually include a low pass filter 1003a for the transceiver and a high pass filter 1003b for the receiver in order to reduce distortions in the received RX signal caused by the transmitted TX signal. The high passed signal S03 is passed to the input 1008a of the first receiver system 100 that is preferably a UMTS receiver system.

The first receiver system 100 processes the input signal S03 and outputs signals S04a, S04b that correspond to an inter-frequency signal of a UMTS signal. The output signals S04a, S04b of the first receiver system 100 are respectively passed to inputs 1500a and 1500c of a signal combiner 1500. The signal combiner 1500 produces an output signal Sa, Sb.

The combiner 1500 includes blocks for performing preprocessing functions such as synchronisation and soft decision functions, and diversity combining functions. Even though the signals S04a and S04b have been labelled with two different symbols, they correspond to I and Q parts of the same complex signal. The same applies to output signals S16a, S16b obtained from the second receiver system 110. For the corresponding (I,Q) signal pairs (S04a, S04b) and (S16a, S16b) the combiner 1500 performs the operations described above, as a result of which the output signal Sa, Sb again corresponding (I,Q) signal is obtained.

The first receiver system 100 contains a low noise preamplifier 1008 that amplifies the signal S03 with a constant gain to an amplified signal S031. The signal S031 is band-pass filtered in the band-pass filter 1009. The band-pass filtered signal S032 is then passed to a frequency converter 1010. The frequency converter 1010 includes an input for signal from a local oscillator 1011 and a mixer. The local oscillator 1011 has been tuned into the centre of the carrier frequency desired within the UMTS frequency band. The frequency converter 1010 outputs signals S04a2 and S04b2 which are low pass filtered in the low pass filters 1020 and 1030. The low pass filtered signals S04a1 and S04b1 are then amplified in the amplifiers 1021 and 1031. The amplified signals S04a and S04b are then fed into the correct inputs 1500a and 1500c of the combiner 1500.

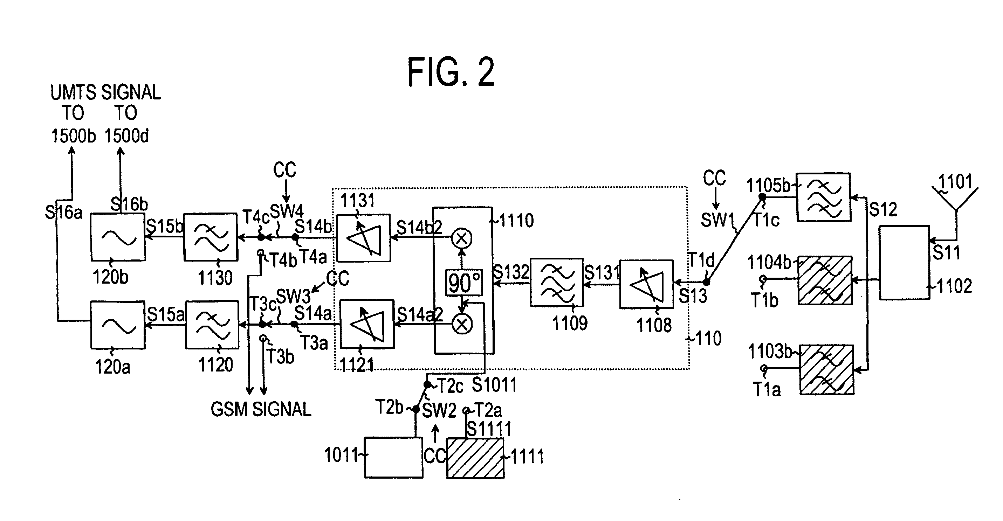

Figure 2 shows how the second receiver system can be adapted to receive a signal, preferably a UMTS signal, in order to obtain a second signal S16a, S16b to be passed to the diversity receiver 1500.

Radio waves carrying a UMTS signal are received by an antenna 1101. The signal S11 from the antenna 1101 is passed to the front end module 1102. The signal S12 processed by the front end module 1102 is then passed to band-pass filters 1103b, 1104b, and 1105b. The different band-pass filters are designed to select the correct frequency bands of the signal S12. Preferably, the band-pass filter 1103b corresponds to the GSM 1900 band, the band-pass filter 1104b corresponds to the GSM 1800 band and the third band-pass filter 1105b corresponds, for example, to the UTRA TDD frequency band. Basically, the GSM bands carry GSM signals whereas the UTRA TDD band carries UMTS signals.

The receive frequency bands for GSM1800, GSM1900 and UMTS are as following: for the GSM 1800 from 1805 to 1880 MHz, for the GSM 1900 from 1930 to 1990 MHz, and for the UTRA TDD from 1900 to 1920 MHz. The transmitted information in the band is in the GSM bands further subdivided to channels with a smaller bandwidth, the width of each channel being 200 kHz. The carrier frequency of a channel lies in the middle of the channel in question.

Signal S12 is band-pass filtered in the band-pass filter 1105b. The output signal S13 of the band-pass filter 1105b is then fed into a second receiver system 110.

In order to correctly select the band-pass filter to be used the system includes a switch SW1 which is connected to a terminal T1d of the second receiver system. The position of the switch SW1 is controlled by a control circuit CC; the switch may get positions in which it has a contact with terminals T1a, T1b, or T1c. The terminal T1a corresponds to the band-pass filter 1103b, the terminal T1b corresponds to the band-pass filter 1104b, and the terminal T1c corresponds to the band-pass filter 1105b. Because the system is now receiving a UMTS signal, the control circuit has instructed the switch SW1 to connect the terminals T1d and T1c.

The operation of the second receiver system 110 is herewith discussed more in detail. Firstly, the input signal S13 is amplified in a low-noise preamplifier 1108 to produce an amplified signal S131. The amplified signal is then band-pass filtered in the band-pass filter 1109 which produces a band-pass signal S132. The signal S132 is passed to a frequency converter 1110 which converts the signal S132 to an intermediate-frequency signal. The frequency converter includes an input for the signal S1011 coming from a local oscillator 1011 which has been tuned into the centre of carrier frequency of the UMTS frequency band in question.

The local oscillator 1011 produces a signal S1011 that is fed to the frequency converter 1110. With the signal S1011 the mixer of the frequency converter 1110 produces intermediate-frequency signals S14a2 and S14b2. These intermediate-frequency signals S14a2 and S14b2 are then amplified in the corresponding amplifiers 1121 and 1131.

The second receiver system 110 is favourably a GSM receiver system in that it contains an ordinary GSM chipset frequently used by many GSM manufacturers. When the second receiver system is used for receiving the signal not being a GSM signal, it requires some modifications. The local oscillator 1111 normally used for producing the signal needed when converting the received and amplified GSM signal to an intermediate-frequency signal cannot be used for converting a UMTS signal centred around a different frequency to an intermediate-frequency signal, but a local oscillator 1011 producing the correct frequency wave S1011 must be used instead. The main reason for this is that the frequency bands used in GSM and used for the WCDMA frequency bands are not identical. This means that the centre of the frequency band also changes and the signal S1111 from the local oscillator 1111 being centred at the GSM frequency band cannot be used.

The amplified signals S14a and S14b are output to terminals T3a and T4a of the second receiver system 110. From there on the signals are passed to the received terminals T3c and T4c of the respective low-pass filters 1120 and 1130.

Were the signal a GSM signal, it would not be passed to a UMTS system nor to the combiner 1500. This is why the switches SW3 and SW4 are introduced. The switch SW3 controlled by the circuit controlling circuit CC selects the terminal into which system the signal from the output terminal T3a is passed. In the GSM mode, terminals T3a and T3b would be connected, but in the UMTS mode terminals T3a and T3c are connected instead. Similarly, the switch SW4 controls the passage of the output signal coming from the terminal T4a. In the GSM mode, terminals T4a and T4b were connected whereas now in the UMTS mode terminals T4a and T4c are connected.

The low-pass filtered signals S15a and S15b are passed to a compensation filter 120a and 120b. The compensation filter has been adapted to equalise the signals S15a and S15b with respect to distortions caused through the signals S15a, S15b by the second receiver system 110, the front end part 1102, and the antenna 1102. For example, the second receiver system 110 may contain a band-pass filter 1109 that is not optimal for receiving the UMTS signal. This on its behalf introduces distortion in the signals S15a, S15b. Because the distortion has to be corrected, the signals S15a, S15b need to be equalised which is performed the compensation filter or equaliser 120a, 120b. The equalised signals S16a, S16b is passed to the terminals 1500c, 1500d of the combining means 1500.

By using two antennas 1001 and 1101 for UMTS signals, the quality of the intermediate-frequency IF signals SA, SB to be passed to the demodulator for message recovery and baseband amplification will be better, if the spatial diversity phenomenon is used. This in turn means that the message recovery and baseband amplification steps succeed better, which on its behalf further improves the performance of the Viterbi decoder, because the quality of the signal Sa, Sb after a combination step is better than the original signal 1500a, 1500b would be. The main reason for this is that now two received paths can be used. An advantage of the present invention is that the second received path is initially the same as used for the GSM band. Hence, no spacious or expensive receiver equipment is needed and the terminal may be made smaller.

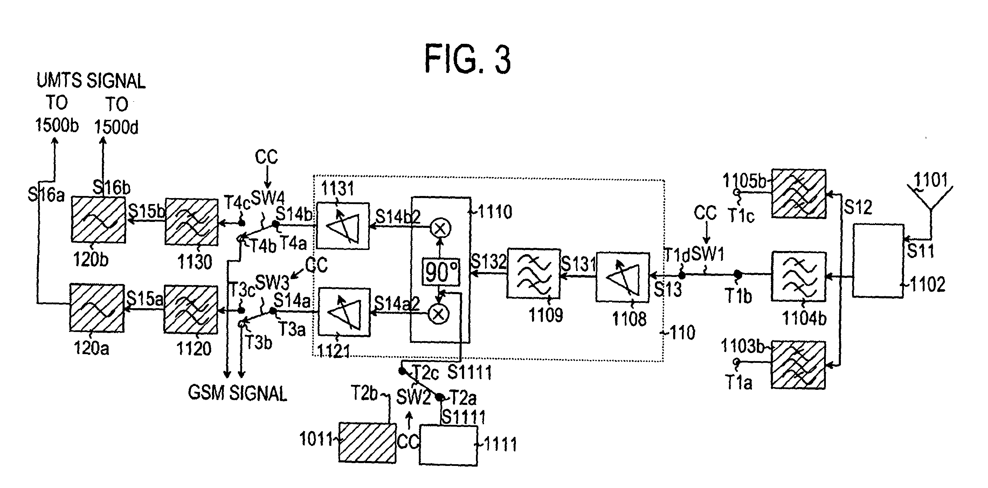

Figure 3 illustrates how the second receiver system 110 is used for receiving GSM signals. The antenna 1001 receives a radio wave which induces an electric signal S11 to the antenna. The signal S11 is passed to a front end system 1102. From the front end system 1102 the signal S12 continues to band-pass filters 1103b, 1104b, 1105b. The band-pass filters 1103b and 1105b are shaded because the signal received is supposed to be a GSM 1800 signal. Hence the signal S12 is now led to the input terminal T1d of the second receiver system 1010 from the output terminal T1b of the band-pass filter 1104b. In order to get the signal from the output terminal of the correct band-pass filter the switch SW1 has to be set into position that the terminals T1b and T1d are connected. In order to change the switch to this position the control circuit CC commands the SW1 to change its position.

The operation of the second receiver system 110 has already been explained above. However, because the signal received is now GSM 1800 signal the switch SW2 is changed to connect the output terminal T2a of the local oscillator 1111 to the input terminal T2c of the frequency converter 1110. The local oscillator 1111 produces a signal S1111 with a frequency centred in the GSM 1800 band received. This signal is used for producing an inter-frequency signal of S14a2, S14b2 out of the signal S132.

Another difference is that the switch 3 and switch 4 must be in the position that need the signal GSM system. Thus, switch 3 connects terminals T3a, T3b, and the switch SW4 connects the terminal T4a to the terminal T4b. The blocks 1120, 1130, 120a and 120b are now shadowed because no signal is passed thereto.

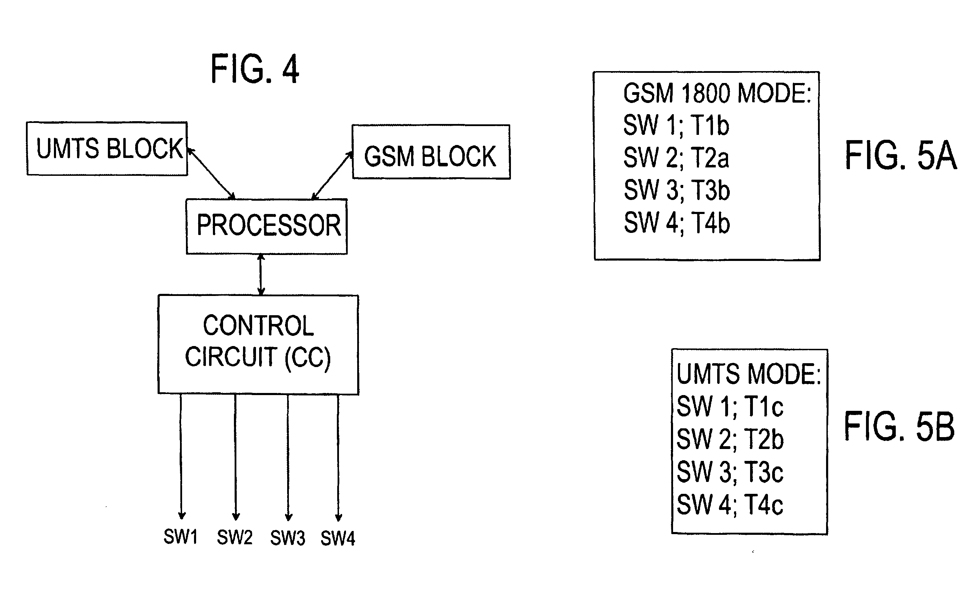

Figure 4 illustrates the operation of the control circuit CC. The control circuit CC is preferably controlled by a processor. The same processor controls the GSM block and the UMTS block of the mobile terminal. The GSM block and the UMTS block contain instructions for handling the transmitter and receiver included in the mobile phone. Thus, the processor also knows in which mode the mobile terminal is. In other words, the processor knows whether the mobile phone is in GSM 1900 mode, GSM 1800 mode or in the UMTS mode and correspondingly if the mobile phone is in the UMTS block what kind of division duplex is used and what is the frequency band in use. The processor is instructed to tell the control circuit CC to control the positions of the switches SW1, SW2, SW3 and SW4. The same control circuit may be used for selecting a correct frequency in the local oscillators 1011 and 1111.

Figure 5A illustrates the positions of the switches SW1-Sw4 when the mobile terminal is in the GSM 1800 mode. SW1 connects the terminals T1b and T1d, SW2 connects the terminals T2a and T2c, SW3 connects terminals T3a, T3b, whereas SW4 connects the terminals T4a and T4b.

Figure 5B illustrates the positions of the switches SW1-SW4 then the mobile terminal in the UMTS mode. SW1 connects the terminals T1c and T1d, SW2 connects the terminals T2b to T2c, SW3 connects the terminals T3a, T3c whereas SW4 connects the terminals T4a and T4c.

The first local oscillator 1111 and the second local oscillator 1011 can also be a single block, i.e. that the local oscillators 1011 and 1111 are realised using a voltage controlled oscillator VCO. This requires a bit wider bandwidth for the VCO used in the local oscillator as compared to the previous VCO solutions. In this case, the instead of controlling which local oscillator is used, the switch SW2 can be assembled to select the voltage that is fed to the local oscillator in order to select the correct voltage. Of course, a voltage source may be used, the output voltage of which is controlled by the control circuit CC.

Specifically, the invention can be used for any dual or triple band terminal having means for receiving two bands close enough to each other, such as and for example PCS or DCS terminals having UMTS capabilities. If a dual band system has at least two antennas and two chipsets on the receive paths, the invention can be used.

To summarise, in a system according to one embodiment of the present system, a receiver which is capable of operating on at least two frequency bands has a first and a second input for signals coming from a first and a second antenna, the antennas being tuned around a first and a second frequency band, respectively. The system further includes a first receiver system optimised for receiving the first frequency band, and a second receiver system optimised for receiving the second frequency band.

The second receiver system includes an amplifier, a band-pass filter, and a frequency converter, the frequency converter further including a local oscillator and a mixer. The local oscillator has been tuned around the centre of the second frequency band, so that the mixer can produce an inter-frequency signal. Further, the second receiver system includes an optional amplifier for amplifying the generated inter-frequency signal.

In accordance with the present invention, the system further includes a second local oscillator for producing a signal centred in the frequency band of the first band needed when generating an inter-frequency signal in the second receiver system. Further, the system includes a compensation filter adapted to equalise the signal coming from the second receiver system with respect to distortions caused to the second signal by the characteristics of the second antenna around the frequency of the first signal and/or by the second receiver system. Further, the system includes combining means to combine the signals coming from the first receiver system and the compensation filter, thus forming a combined signal, preferably using a diversity combiner. This enables the system to select one of the two receive paths if the performance of one of the antennas is weaker compared to the other antenna.

The system may include a switch between the second antenna and the second receiver for selecting a band-pass filter to be used for the received signal, and at least two corresponding filters. The output of the second receiver system can be connected to a switch for passing the signal to the combining means or to the signal path used for signal of the second frequency band. In this way both the signal paths may be used simultaneously. With the help of the compensation filter the filtering characteristics of the second receiver system is further improved.

The receiver system fits especially well for mobile terminals having multiband capabilities, such as capabilities operating in the TDMA, CDMA, or WCDMA band. In this way the UMTS receiving performance of a dual mode GSM/UMTS mobile terminal may be improved. Similarly, the GSM receiving performance can be improved as compared to the pure GSM receiving performance, for example, on areas where there is no UMTS coverage.

Even though the invention has been described here with reference to the GSM and UMTS communication systems, it is not meant to be restrictive in any way, but the scope and of the invention is to be interpreted in the spirit of the appended claims. A person skilled in the art might only want to reuse a smaller part of the GSM chipset, for example. Thus the signal path would differ to that from the signal path presented above, but the principles of diversity receiving combined with at least a partial reuse of the received path is to be understood to have been covered by the patent claims.

## Claims

1. A diversity receiver arrangement capable of operating on at least two frequency bands, the diversity receiver arrangement **comprising:**
- a first and second input (1008a, T1d) for a first and a second signal (S03, S13) from a first and a second antenna (1001, 1101), the first and second antennas (1001, 1101) being tuned around a first and second frequency band, respectively;
- a first receiver system (100) optimised for receiving the first signal (S03) of the first frequency band; and
- a second receiver system (110) optimised for receiving the second signal (S13) of the second frequency band, the second receiver system (110) including i) a preamplifier (1108), ii) a band-pass filter (1109), and iii) a frequency converter (1110) which uses a third signal (S1111) coming from oscillator means (1011, 1111) tuned into the second frequency band, a mixer (1110), and iv) an amplifier (1121, 1131); and
- means for replacing the third signal (S1111) from the oscillator means (1011, 1111) by a fourth signal (S1011) tuned into the first frequency band for obtaining a signal (S16a, S16b) from the second receiver system (110), to be used for receiver diversity purposes.

2. A diversity receiver arrangement according to claim 1, **wherein:**
the means for replacing the third signal (S1111) from the oscillator means (1011, 1111) include a switch (SW2) for selecting between the third signal (S1011) coming from a first oscillator (1011) and the fourth signal (S1111) coming from a second oscillator (1111) of said oscillator means.

3. A diversity receiver arrangement according to claim 1, **wherein:**
the means for replacing the third signal (S1111) from the oscillator (1011, 1111) include a voltage controlled oscillator (1011, 1111).

4. A diversity receiver arrangement according to any one of the preceding claims, the diversity receiver arrangement further **comprising:**
a band pass filter (1009) in the first receiver system (100) being optimised for the first frequency band; and
in the arrangement the band pass filter (1109) in the second receiver system (110) being optimised for the second frequency band.

5. A diversity receiver arrangement according to any one of the preceding claims further **comprising:**
a compensation filter (120a, 120b) adapted to equalise a fifth signal (S15a, S15b), from the second receiver system (110), with respect to distortions included in the fifth signal (S15a, S15b), arising from characteristics of the second antenna (1101) around the frequency of the first signal and/or by the second receiver system, thus producing an equalised sixth signal (S16a, S16b).

6. A diversity receiver arrangement according to any one of the preceding claims,
**wherein:**
a preamplifier (1008) in the first receiver system (100) and the preamplifier (1108) in the second receiver system (110) are broadband preamplifiers.

7. A diversity receiver arrangement according to any one of the preceding claims;
wherein: the system further includes means (1500) for combining a seventh signal (S04a, S04b) from the first receiver system (100) and an eighth signal (S16a, S16b) from the second receiver systems, the seventh and eighth signals being diverse.

8. A diversity receiver arrangement according to any one of the preceding claims,
wherein: the first receiver system (100) and the second receiver system (110) of the diversity receiver arrangement are asymmetric.

9. A diversity receiving method **comprising** the steps of:
- receiving a first and a second signal (S03, S13) from a first and a second antenna (1001, 1101), the first and second antennas (1001, 1101) being tuned around first and second frequency bands;
- passing the first signal (S03) to a first receiver system (100) optimised for receiving the first frequency band;
- passing the second signal (S13) to a second receiver system (110) optimised for receiving the second frequency band, where the second signal (S13) is i) preamplified, ii) band-pass filtered, and iii) frequency converted,
wherein the second signal (S13) is mixed with a third signal (S1111) obtained from oscillator means (1011, 1111), and iv) amplified; and
- wherein: the third signal (S1111) coming from the oscillator means (1011, 1111) is replaced by a fourth signal (S1011) tuned into the first frequency band for obtaining a fifth signal (S16a, S16b) from the second receiver system (110), to be used for receiver diversity purposes.

10. A diversity receiving method according to claim 9,
**wherein:** the replacing of the third signal (S1111) is performed using a switch (SW2) for selecting between the third and fourth signals (S1011, S1111) from two oscillators (1011, 1011) of said oscillator means.

11. A diversity receiving method according to claim 9,
**wherein:** the replacing of the third signal (S1111) is performed by a voltage controlled oscillator (1011, 1111).

12. A diversity receiving method according to any one of claims 9-11, further **comprising** the step of:
compensating a sixth signal (S15a, S15b) of the second receiver system (110) with respect to distortions caused to the sixth signal (S15a, S15b) in the receiving and/or amplifying and/or band pass filtering steps, thus producing the fifth signal (S16a, S16b).

13. A method according to any one of claims 9-12 further **comprising** the step of:
combining a seventh signal (S04a, S04b) from the first receiver system (100), and the fifth signal (S16a, S16b) from the second receiver system (110), the seventh signal (S04a, S04b) and the fifth signal (S16a, S16b) being diverse, to form a combined signal (Sa, Sb).

14. A method according to any one of claims 9-13,
**wherein:**
a band pass filtering step performed in the first
receiver system (100) and the band pass filtering step performed in the second receiver system are asymmetric.

15. A method according to any one of claims 9-13,
**wherein:**
the first frequency band is a UMTS band and the second frequency band is a GSM band.

16. A method according to any one of claims 9-13,
**wherein:**
the first frequency band is a GSM band and the second frequency band is a UMTS band.

17. A mobile phone
comprising
an arrangement according to any one of claims 1 to 8.

18. A mobile phone
adapted to perform a method according to any one of claims 9 to 16.

## Patentansprüche

1. Eine Diversity-Empfänger-Anordnung, die in mindestens zwei Frequenzbändern arbeiten kann und Folgendes **umfasst:**
- Einen ersten und einen zweiten Eingang (1008a, T1d) für ein erstes und ein zweites Signal (S03, S13) von einer ersten und einer zweiten Antenne (1001, 1101), wobei die erste und die zweite Antenne (1001, 1101) ungefähr auf ein erstes bzw. zweites Frequenzband abgestimmt sind;
- ein erstes Empfängersystem (100), optimiert für das Empfangen des ersten Signals (S03) des ersten Frequenzbandes; und
- ein zweites Empfängersystem (110), optimiert für das Empfangen des zweiten Signals (S13) des zweiten Frequenzbandes, wobei das zweite Empfängersystem (110) umfasst i) einen Vorverstärker (1108), ii) ein Bandfilter (1109) und iii) einen Frequenzumsetzer (d. h. einen Mischer) (1110), welcher ein drittes, von einer auf eine im zweiten Frequenzband liegende Frequenz abgestimmten Oszillator-Vorrichtung (1011, 1111) kommendes Signal (S1111) nutzt, und 4) einen Verstärker (1121, 1131); und
- Mittel zum Ersetzen des dritten Signals (S1111) von der oszillator-Vorrichtung (1011, 1111) durch ein viertes, im ersten Frequenzband liegendes Signal (S1011) zwecks Bildung eines Signals (S16a, S16b) vom zweiten Empfängersystem (110), bestimmt für Empfänger-Diversity-Zwecke.

2. Eine Diversity-Empfänger-Anordnung gemäß Anspruch 1, **wobei** das Mittel zum Ersetzen des dritten Signals S1111) von der Oszillator-Vorrichtung (1011, 1111) einen Schalter (SW2) umfasst, welcher zum Wählen zwischen dem dritten, von einem ersten Oszillator (1011) kommenden Signal (S1011) und dem vierten, von einem zweiten Oszillator (1111) der besagten Oszillator-Vorrichtung kommenden Signal (S1111) dient.

3. Eine Diversity-Empfänger-Anordnung gemäß Anspruch 1, **wobei** das Mittel zum Ersetzen des dritten Signals (S1111) von dem Oszillator (1011, 1111) einen spannungsgesteuerten Oszillator (1011, 1111) umfasst.

4. Eine Diversity-Empfänger-Anordnung gemäß einem beliebigen der vorstehenden Ansprüche, zusätzlich **umfassend**
ein für das erste Frequenzband optimiertes Bandfilter (1009) im ersten Empfängersystem (100) sowie ein für das zweite Frequenzband optimiertes Bandfilter (1109) im zweiten Empfängersystem (110).

5. Eine Diversity-Empfänger-Anordnung gemäß einem beliebigen der vorstehenden Ansprüche, zusätzlich **umfassend:**
ein Kompensationsfilter (120a, 120b), dafür ausgelegt, ein fünftes Signal (S15a, S15b) vom zweiten Empfängersystem (110) hinsichtlich derjenigen Verzerrungen zu entzerren, welches dieses fünfte Signal (S15a, S15b) durch die Eigenschaften der zweiten Antenne (1101) im Bereich der Frequenz des ersten Signals und/oder durch das zweite Empfängersystem erleidet, so dass ein entzerrtes sechstes Signal (S16a, S16b) entsteht.

6. Eine Diversity-Empfänger-Anordnung gemäß einem beliebigen der vorstehenden Ansprüche,
**wobei**
ein Vorverstärker (1008) im ersten Empfängersystem (100) und der Vorverstärker (1108) im zweiten Empfängersystem (110) Breitband-Vorverstärker sind.

7. Eine Diversity-Empfänger-Anordnung gemäß einem beliebigen der vorstehenden Ansprüche;
**wobei** das System zusätzlich Mittel (1500) zum Zusammenfassen eines siebenten Signals (S04a, S04b) vom ersten Empfängersystem (100) und eines achten Signals (S16a, S16b) vom zweiten Empfängersystem enthält und wobei sich das siebente und das achte Signal voneinander unterscheiden.

8. Eine Diversity-Empfänger-Anordnung gemäß einem beliebigen der vorstehenden Ansprüche,
**wobei** das erste Empfängersystem (100) und das zweite Empfängersystem (110) der Diversity-Empfänger-Anordnung asymmetrisch sind.

9. Ein Diversity-Empfangs-Verfahren, folgende Schritte **umfassend:**
- Empfangen eines ersten und eines zweiten Signals (S03, S13) von einer ersten und einer zweiten Antenne (1001, 1101), wobei diese Antennen (1001, 1101) ungefähr auf das erste und das zweite Frequenzband abgestimmt sind;
- Weiterleiten des ersten Signals (S03) an ein zum Empfangen des ersten Frequenzbandes optimiertes erstes Empfängersystem (100);
- Weiterleiten des zweiten Signals (S13) an ein zum Empfangen des zweiten Frequenzbandes optimiertes zweites Empfängersystem (110), wobei das zweite Signal (S13) i) vorverstärkt, ii) bandpassgefiltert und iii) frequenzumgesetzt wird, indem das zweite Signal (S13) mit einem dritten, von einer Oszillator-Vorrichtung (1011, 1111) kommenden Signal (S1111) gemischt wird, und iv) verstärkt wird; und
- wobei das dritte, von der Oszillator-Vorrichtung (1011, 1111) kommende Signal (S1111) durch ein viertes, im ersten Frequenzband liegendes Signal (S1011) ersetzt wird, um ein fünftes Signal (S16a, S16b) vom zweiten Empfängersystem (110) zu bekommen, bestimmt für Empfänger-Diversity-Zwecke.

10. Ein Diversity-Empfangs-Verfahren gemäß Anspruch 9, **wobei** das Ersetzen des dritten Signals (S1111) unter Verwendung eines Schalters (SW2) zum Wählen zwischen dem dritten und dem vierten Signal (S1011 und S1111) von zwei Oszillatoren (1011, 1111) der besagten Oszillator-Vorrichtung erfolgt.

11. Ein Diversity-Empfangs-Verfahren gemäß Anspruch 9, **wobei** das Ersetzen des dritten Signals (S1111) mittels eines spannungsgesteuerten Oszillators (1011, 1111) durchgeführt wird.

12. Ein Diversity-Empfangs-Verfahren gemäß einem beliebigen der Ansprüche 9 bis 11, zusätzlich den Schritt **umfassend,**
ein sechstes Signal (S15a, S15b) des zweiten Empfängersystems (110) hinsichtlich derjenigen Verzerrungen zu kompensieren, welche das sechste Signal (S15a, S15b) bei den Schritten des Empfangens und/oder des Verstärkens und/oder des Bandfilterns erleidet, so dass das fünfte Signal (S16a, S16b) entsteht.

13. Ein Verfahren gemäß einem beliebigen der Ansprüche 9 bis 12, zusätzlich den Schritt **umfassend,**
ein siebentes Signal (S04a, S04b) vom ersten Empfängersystem (100) und das fünfte Signal (S16a, S16b) vom zweiten Empfängersystem (110) zusammenzufassen, um ein kombiniertes Signal (Sa, Sb) zu bilden, wobei sich das siebente Signal (S04a, S04b) und das fünfte Signal (S16a, S16b) voneinander unterscheiden.

14. Ein Verfahren gemäß einem beliebigen der Ansprüche 9 bis 13,
**wobei**
ein im ersten Empfängersystem (100) durchgeführter Bandpassfilterungs-Schritt und der im zweiten Empfängersystem durchgeführte Bandpassfilterungs-Schritt asymmetrisch sind.

15. Ein Verfahren gemäß einem beliebigen der Ansprüche 9 bis 13,
**wobei**
das erste Frequenzband ein UMTS-Band und das zweite Frequenzband ein GSM-Band ist.

16. Ein Verfahren gemäß einem beliebigen der Ansprüche 9 bis 13,
**wobei**
das erste Frequenzband ein GSM-Band und das zweite Frequenzband ein UMTS-Band ist.

17. Ein Mobiltelefon,
**umfassend**
eine Anordnung gemäß einem beliebigen der Ansprüche 1 bis 8.

18. Ein Mobiltelefon, konstruiert zum Durchführen eines Verfahrens gemäß einem beliebigen der Ansprüche 9 bis 16.

## Revendications

1. Dispositif de réception en diversité capable de fonctionner sur au moins deux bandes de fréquences, le dispositif de réception en diversité comprenant :
- une première et une deuxième entrée (1008a, T1d) pour un premier et un deuxième signal (S03, S13) en provenance d'une première antenne et d'une deuxième antenne (1001, 1101), les première et deuxième antennes (1001, 1101) étant syntonisées respectivement autour d'une première bande de fréquences et d'une deuxième bande de fréquences;
- un premier système récepteur (100) optimisé pour recevoir le premier signal (S03) de la première bande de fréquences; et
- un deuxième système récepteur (110) optimisé pour recevoir le deuxième signal (S13) de la deuxième bande de fréquences, le deuxième système récepteur (110) comprenant i) un préamplificateur (1108), ii) un filtre passe-bande (1109) et iii) un convertisseur de fréquence (1110) qui utilise un troisième signal (S1111) provenant d'un moyen oscillateur (1011, 1111) syntonisé dans la deuxième bande de fréquences, un mélangeur (1110) et iv) un amplificateur (1121, 1131); et
- un moyen pour remplacer le troisième signal (S1111) en provenance du moyen oscillateur (1011, 1111) par un quatrième signal (S1011) syntonisé dans la première bande de fréquences afin d'obtenir un signal (S16a, S16b) en provenance du deuxième système récepteur (110), à utiliser à des fins de réception en diversité.

2. Dispositif de réception en diversité selon la revendication 1,
**dans lequel :**
le moyen pour remplacer le troisième signal (S1111) en provenance du moyen oscillateur (1011, 1111) comprend un interrupteur (SW2) pour sélectionner entre le troisième signal (S1011) provenant d'un premier oscillateur (1011) et le quatrième signal (S1111) provenant d'un deuxième oscillateur (1111) dudit moyen oscillateur.

3. Dispositif de réception en diversité selon la revendication 1,
**dans lequel :**
le moyen pour remplacer le troisième signal (S1111) en provenance de l'oscillateur (1011, 1111) comprend un oscillateur à fréquence commandée (1011, 1111).

4. Dispositif de réception en diversité selon l'une quelconque des revendications précédentes, le dispositif de réception en diversité **comprenant** en outre :
un filtre passe-bande (1009) dans le premier système récepteur (100) optimisé pour la première bande de fréquences; et
dans le dispositif, le filtre passe-bande (1109) du deuxième système récepteur (110) étant optimisé pour la deuxième bande de fréquences.

5. Dispositif de réception en diversité selon l'une quelconque des revendications précédentes, **comprenant** en outre :
un filtre de compensation (120a, 120b) adapté pour égaliser un cinquième signal (S15a, S15b), en provenance du deuxième système récepteur (110), par rapport aux distorsions incluses dans le cinquième signal (S15a, S15b), apparaissant à partir des caractéristiques de la deuxième antenne (1101) autour de la fréquence du premier signal et/ou par le deuxième système récepteur, produisant ainsi un sixième signal égalisé (S16a, S16b).

6. Dispositif de réception en diversité selon l'une quelconque des revendications précédentes,
**dans lequel :**
un préamplificateur (1008) dans le premier système récepteur (100) et le préamplificateur (1108) dans le deuxième système récepteur (110) sont des préamplificateurs à large bande.

7. Dispositif de réception en diversité selon l'une quelconque des revendications précédentes,
**dans lequel :** le système comprend en outre un moyen (1500) pour combiner un septième signal (S04a, S04b) en provenance du premier système récepteur (100) et un huitième signal (S16a, S16b) en provenance du deuxième système récepteur, les septième et huitième signaux étant en diversité.

8. Dispositif de réception en diversité selon l'une quelconque des revendications précédentes,
**dans lequel :** le premier système récepteur (100) et le deuxième système récepteur (110) du dispositif de réception en diversité sont asymétriques.

9. Procédé de réception en diversité comprenant les étapes consistant à :
- recevoir un premier et un deuxième signal (S03, S13) en provenance d'une première et d'une deuxième antenne (1001, 1101), les première et deuxième antennes (1001, 1101) étant syntonisées autour d'une première et d'une deuxième bande de fréquences;
- transmettre le premier signal (S03) à un premier système récepteur (100) optimisé pour recevoir la première bande de fréquences;
- transmettre le deuxième signal (S13) à un deuxième système récepteur (110) optimisé pour recevoir la deuxième bande de fréquences, où le deuxième signal (S13) est i) préamplifié, ii) filtré passe-bande et iii) converti en fréquence, dans lequel le deuxième signal (S13) est mélangé à un troisième signal (S1111) obtenu d'un moyen oscillateur (1011, 1111), et iv) amplifié; et
- dans lequel : le troisième signal (S1111) provenant du moyen oscillateur (1011, 1111) est remplacé par un quatrième signal (S1011) syntonisé dans la première bande de fréquences pour obtenir un cinquième signal (S16a, S16b) du deuxième système récepteur (110), à utiliser à des fins de réception en diversité.

10. Procédé de réception en diversité selon la revendication 9,
**dans lequel :** le remplacement du troisième signal (S1111) est exécuté au moyen d'un interrupteur (SW2) pour sélectionner entre les troisième et quatrième signaux (S1011, S1111) en provenance des deux oscillateurs (1011, 1111) dudit moyen oscillateur.

11. Procédé de réception en diversité selon la revendication 9,
**dans lequel** : le remplacement du troisième signal (S1111) est exécuté par un oscillateur à fréquence commandée (1011, 1111).

12. Procédé de réception en diversité selon l'une quelconque des revendications 9 à 11, **comprenant** en outre l'étape consistant à :
compenser un sixième signal (S15a, S15b) du deuxième système récepteur (110) par rapport aux distorsions provoquées sur le sixième signal (S15a, S15b) aux étapes de réception et/ou d'amplification et/ou de filtrage passe-bande, produisant ainsi le cinquième signal (S16a, S16b).

13. Procédé selon l'une quelconque des revendications 9 à 12, **comprenant** en outre l'étape consistant à :
combiner un septième signal (S04a, S04b) en provenance du premier système récepteur (100), et le cinquième signal (S16a, S16b) en provenance du deuxième système récepteur (110), le septième signal (S04a, S04b) et le cinquième signal (S16a, S16b) étant en diversité, pour former un signal combiné (Sa, Sb).

14. Procédé selon l'une quelconque des revendications 9 à 13,
**dans lequel** :
une étape de filtrage passe-bande exécutée dans le premier système récepteur (100) et une étape de filtrage passe-bande exécutée dans le deuxième système récepteur sont asymétriques.

15. Procédé selon l'une quelconque des revendications 9 à 13,
**dans lequel :**
la première bande de fréquences est une bande UMTS et la deuxième bande de fréquences est une bande GSM.

16. Procédé selon l'une quelconque des revendications 9 à 13,
**dans lequel :**
la première bande de fréquences est une bande GSM et la deuxième bande de fréquences est une bande UMTS.

17. Téléphone mobile
**comprenant**
un dispositif selon l'une quelconque des revendications 1 à 8.

18. Téléphone mobile
adapté pour exécuter un procédé selon l'une quelconque des revendications 9 à 16.
